# EUROPEAN PATENT APPLICATION

(11) **EP 2 815 972 A1**
(43) Date of publication of application: **24.12.2014**
(21) Application number: 13172370.2
(22) Date of filing: 17.06.2013
(51) Int. Cl.: B64D 11/00, B64D 11/04

(54) **Cargo container comprising a storage rack module and a transport module, vehicle therewith and method of operating thereof**

(71) Applicant: Airbus Operations GmbH, 21129 Hamburg (DE)
(72) Inventor: Ebeling, Stefan, 21129 Hamburg (DE); Gärtner, Jens, 20359 Hamburg (DE); Köhler, Andreas, 22303 Hamburg (DE); Lange, Roland, 21640 Nottensdorf (DE); Rosenthal, Thomas, 18057 Rostock (DE); Kotian, Raj, 20257 Hamburg (DE); Chliwa, Ralf, 21129 Hamburg (DE); Reiss, Matthias, 21129 Hamburg (DE)
(74) Representative: UEXKÜLL & STOLBERG

(57) **Abstract**

The invention relates to a cargo container for storing goods and for loading into a cargo compartment of a vehicle. The cargo container (1) comprises a housing (21) including a base plate (2) and defining an interior cavity, a storage rack arrangement (3) being adapted for storing a plurality of goods in the cavity, and a transport arrangement (4) operable for selectively transporting goods stored in the storage rack arrangement (3) from the storage rack arrangement to a predetermined location in the cavity. The transport arrangement (4) comprises a conveying means (13) and a control unit (15) adapted for automatically controlling and operating the conveying apparatus (13). The storage rack arrangement is constructed in the form of at least one storage rack module (3) and the transport arrangement is constructed in the form of at least one transport module (4) separate from the at least one storage rack module (3). Each of the at least one storage rack module (3) and/or each of the at least one transport module (4) is independently removable from the container (1). For each of the storage rack modules (3) and transport modules (4) removable from the container (1) the cargo container (1) comprises a releasable coupling mechanism (22) for fastening the respective module (3, 4) to the housing (21), to the base plate (2) and/or to another one of the at least one storage rack module (3) and at least one transport module (4) and for locating it in a predetermined position with respect to the remainder of the container (1).

## Description

The present application relates to a cargo container for storing goods and for loading into and unloading from a cargo compartment of a vehicle, in particular of an aircraft.

Aircrafts and other vehicles typically comprise several distinct compartments separated from each other by wall structures. In this connection it may be desirable to utilize, process or handle objects in a structure, for example a monument in an aircraft, provided in a first compartment, but to store these objects in a second compartment prior to their use, processing or handling in order to maximize the space available in the first compartment. Such compartments may comprise compartments arranged one above the other and separated by a floor structure, for example a passenger compartment of an aircraft arranged above a cargo compartment or cargo bay.

In the case of the first or upper compartment being a passenger compartment storing such objects in the second or lower compartment provides the advantage of maximizing the space available for seating passengers, thereby increasing profitability and flexibility in selecting an optimum cabin arrangement. Further, in the case of the second or lower compartment being a cargo compartment the advantage is provided that loading the objects into the vehicle is facilitated and may be carried out in accordance with standard cargo loading procedures.

One particular example for this situation is a monument which is an aircraft galley. Such galley is mounted on a floor structure in the passenger compartment of an aircraft, and the catering goods, such as food and beverages, are often loaded in boxes and/or trolleys into the aircraft and stored in a storage rack arrangement in the galley or in a separate storage rack arrangement located within the passenger compartment. Thus, in this case considerable passenger compartment space is wasted by a storage rack arrangement. It has, therefore, been suggested to dispense with the storage rack arrangement in the passenger compartment, and to utilize instead a storage rack arrangement located in the cargo compartment below the passenger compartment. In particular, such storage rack arrangement may be provided in a removable cargo container, which can be loaded into the cargo compartment together with other conventional cargo containers. Thus, boxes and trolleys with catering goods can advantageously be stored into the storage rack arrangement outside the aircraft. Such an arrangement may also be advantageously utilized in other vehicles with other arrangements of the first and second compartments.

In any case, for the separate storage of the goods to be feasible, it is necessary to provide for a mechanism for transferring objects to be utilized, processed or handled in or by the structure or monument mounted in the first or upper compartment from the second or lower compartment, e.g. in a direction perpendicularly or transversely to the floor structure in the case of an upper compartment and a lower compartment. Such transfer mechanism must comprise an automated means for picking up and removing a selected one of the objects stored in a storage rack arrangement in the cargo container. For example, this automated means may be adapted for transporting a removed object in a predetermined position in the cargo container, allowing a gripping apparatus for gripping and transporting the object to the first compartment to grip the object. Of course, apertures or openings must be provided in a wall of the cargo container and in a wall separating the first and second compartments for this purpose.

Therefore, these cargo containers, which may advantageously have the outer shape and dimensions of a standard cargo container, for example a standard LD3 container, have a rather complex interior construction involving electric, pneumatic and/or hydraulic means in addition to mechanical means. Consequently, maintenance and cleaning of the cargo containers is a rather complicated, costly and time-consuming process.

It is therefore an object of the present invention to provide a cargo container including a storage rack arrangement and a transport arrangement, wherein the maintenance, cleaning and handling is simplified, thereby reducing costs and time expenditure.

This problem is solved by a cargo container as claimed in claim 1, a vehicle as claimed in claim 11, and a method as claimed in claim 15. Advantageous embodiments of the cargo container, the vehicle and the method are the subject-matter of the respective dependent claims.

According to the present invention a cargo container comprises a housing including a base plate and defining an interior cavity, a storage rack arrangement, e.g. disposed in the cavity, being adapted for storing a plurality of goods, and a transport arrangement, e.g. disposed in the cavity, operable for selectively transporting goods stored in the storage rack arrangement from the storage rack arrangement to a predetermined location in the cavity. The transport arrangement comprises a conveying means and a control unit adapted for automatically controlling and operating the conveying apparatus. It should be noted that the control unit may in turn be controlled by an external control unit to which the control unit of the cargo container is coupled when being loaded into a cargo compartment of a vehicle.

The storage rack arrangement is provided in the form of at least one storage rack module comprising a storage rack, and the transport arrangement is provided in the form of at least one transport module comprising a transport means and separate from the at least one storage rack module. Each of the at least one storage rack module and/or each of the at least one transport module is independently and selectively removable from the cargo container, e.g. from the cavity. This also means that the respective modules can be selectively rearranged in or on the cargo container, e.g. inserted into the cargo container or into the cavity. Further, for each of the storage rack modules and transport modules removable from the container the cargo container comprises a releasable coupling mechanism for fastening the respective module to the housing, to the base plate, another one of the at least one storage rack module and/or another support structure of the container and for locating it in a predetermined position with respect to the remainder of the container, e.g. in the cargo container. The fastening and the predetermined positions of the individual modules are chosen such that with the modules in their predetermined positions the at least one storage rack module and the at least one transport module are able to operatively cooperate in the manner described above, i.e. the at least one transport module is operable for picking up and removing a selected one of the objects stored in a storage rack arrangement in the cargo container.

Due to this construction the advantage is provided that the transport arrangement can be separated from the storage rack arrangement and can be maintained, cleaned and handled separately. Thus, the "intelligent" portions of the cargo container and the "unintelligent" portions of the cargo container can each be processed according to their specific requirements without having to take into consideration characteristics of the other portions. For example, the storage rack modules, which are preferably entirely passive and do not comprise electric means, may be cleaned without having to take into account the presence of sensible components of the transport modules. On the other hand, access to and maintenance and cleaning of the transport modules is easier when they are located remote from the storage rack modules. Also, it is advantageously possible to have several identical or even non-identical storage rack modules and/or transport modules in order to be able to quickly replace modules. For example, having several storage rack modules, and possible only one transport module, allows quickly loading goods into the container by having ready a storage rack module loaded with goods and replacing an empty storage rack module forming part of the container with the loaded storage rack module. Also, having ready replacement modules provides for redundancy and facilitates maintenance.

In a preferred embodiment the at least one storage rack module is a non-electrical module. Thus, if cooling of objects stored in the at least one storage rack module is required, it preferably comprises at least one passive refrigerating means. However, it is also possible to provide the at least one storage rack module with at least a portion of an active refrigerating or cooling means, in particular tubing or piping. The electrical portion of such active means may then still be arranged outside from the respective storage rack module, or also in it. In any case, even if, in other embodiments, the at least one storage rack module comprises electrical components, it is preferred if no electrical connections exist between the at least one storage rack module and the at least one transport module.

In a preferred embodiment, for each of the storage rack modules and transport modules removable from container or the cavity the housing includes a corresponding door and/or removable wall portion for enabling removal of the respective storage rack module or transport module from the cargo container or the cavity and rearrangement of the respective module in or on the container, e.g. insertion into the cavity. It is to be noted that such a removable wall portion may also be part of the respective module, i.e. the wall portion can then be released from the remainder of the housing and removed from the housing together with its module. In that case the modules are not removed from and inserted into the housing or cavity, but are removed from the other modules and rearranged with respect to the other modules. In other words, the container including at least portions of the housing is disassembled and reassembled.

In a preferred embodiment the housing comprises an opening, and the predetermined location is arranged in the immediate vicinity of the opening. In this manner the construction of an external gripping and transport means for gripping an object transported by one of the at least one transport module and transporting it away from the cargo container is greatly simplified, because it can be transported along a linear path.

In a preferred embodiment the at least one transport module is fixedly secured to the base plate or comprises the base plate, and the at least one storage rack module is removable from the container, e.g. from the housing or cavity. Thus, it is possible to remove the storage rack modules from the cargo container and from a cargo compartment of a vehicle while leaving the at least one transport module in place secured to cargo hold device in the cargo compartment. After removing the at least one storage rack module from the vehicle they can be cleaned and/or maintained, and it is advantageously possible to store objects in the storage racks of the storage rack modules outside the vehicle. As in any embodiment, the objects may be stored individually or packed in boxes and may be catering goods, such as food and beverages. After storing objects in the storage rack modules at, e.g., the location of a supplier, they may be transported to the vehicle, loaded into the vehicle and put into place in the cargo container. In other words, the cargo container is partly disassembled and removed upon unloading and is reassembled at its location inside the vehicle upon loading. Storing of objects and loading them into the vehicle is greatly facilitated and accelerated, because less weight has to be unloaded and it is possible to quickly exchange empty storage rack modules with other identical storage rack modules stocked with objects.

In a preferred embodiment at least one of the coupling mechanisms comprises a rail arrangement provided on the base plate and adapted for receiving and guiding the respective module during insertion and removal thereof. This ensures that the respective modules can be easily and quickly reinserted into the cargo container and reliably located at their fastening positions.

In a preferred embodiment the at least one transport module comprises at least one electric motor and/or at least one pneumatic or hydraulic drive means and/or at least one sensor and/or at least one control means forming part of or constituting the control unit. Additionally or in the alternative the at least one transport module comprises a conveyor belt, a conveyor chain, a gripper and/or a lifting means forming part of or constituting the conveying means.

In a preferred embodiment the cargo container is shaped and dimensioned in accordance with a standard LD3 container. However, it is also possible for the cargo container to have the shapes and dimensions of other standard or non-standard cargo containers.

The present invention also relates to a vehicle comprising a first compartment and a second compartment separated by a wall. The vehicle further comprises an opening in the wall, a galley or kitchen arrangement disposed in the first compartment, a mounting means arranged in the second compartment and adapted for holding a cargo container of the above construction at a predetermined place in the second compartment, a cargo container of the above construction, and a conveyor apparatus. The predetermined place and the conveyor apparatus are arranged and adapted such that when the cargo container is held by the mounting means the conveyor apparatus is operable to convey goods from the predetermined location in the cargo container through the opening in the wall between the first compartment and the second compartment to the galley and vice versa. Thus, as noted above, the cargo container preferably has an access aperture in a wall portion thereof arranged such that a part of the conveyor apparatus, e.g. a gripping device, can enter the cargo container to reach the predetermined position.

In a preferred embodiment of the vehicle the first compartment is a passenger compartment and the second compartment is a cargo compartment.

In this embodiment and in other embodiments of the vehicle it is further preferred if the wall is a floor portion or structure of the vehicle and, in operation of the vehicle, the first compartment is arranged above the second compartment. As already indicated above, in that case it is particularly preferred if the mounting means is arranged such that when holding a cargo container the cargo container, and in particular an access aperture in an upper wall thereof, is disposed directly beneath the opening in the wall between the first and second compartments. The conveyor apparatus is then a lift apparatus adapted for vertically lifting objects between the cargo container and the galley.

In a preferred embodiment the vehicle is an aircraft. The advantages mentioned above for the cargo container of the present invention are of particular importance for aircrafts.

In accordance with the above explanations, the invention also relates to a method of operating a cargo container according to any of the above embodiments. The method comprises arranging a cargo container of the above construction in a compartment of a vehicle, in particular in the cargo compartment of an aircraft. The method further comprises removing at least one of the storage rack modules and/or at least one of the transport modules from the cargo container and, preferably, from the vehicle. For any removed storage rack module the method comprises reinserting it into or rearranging it in or on the (remainder of the) container after storing objects in it or replacing it with an identical storage rack module having objects stored therein, and/or cleaning and/or performing maintenance operations on it. For any removed transport module the method comprises performing maintenance operations on it and then reinserting it into or rearranging it in or on the (remainder of the) container. In the alternative, the at least one transport module may be left in place and maintained in its place within the vehicle after having removed the at least one storage rack module.

In this regard, it is also possible that the base plate and the at least one transport module is fixedly installed in the vehicle. Then only the storage rack modules are removable.

In the following exemplary embodiments of the invention will be described in more detail with reference to the figures.
Figure 1 shows a cargo container according to the present invention with most of the walls forming the outer housing removed.
Figure 2 shows a cargo container according to the present invention with a transport module removed from the container.
Figure 3 shows a cargo container according to the present invention with two storage rack modules removed from the container.

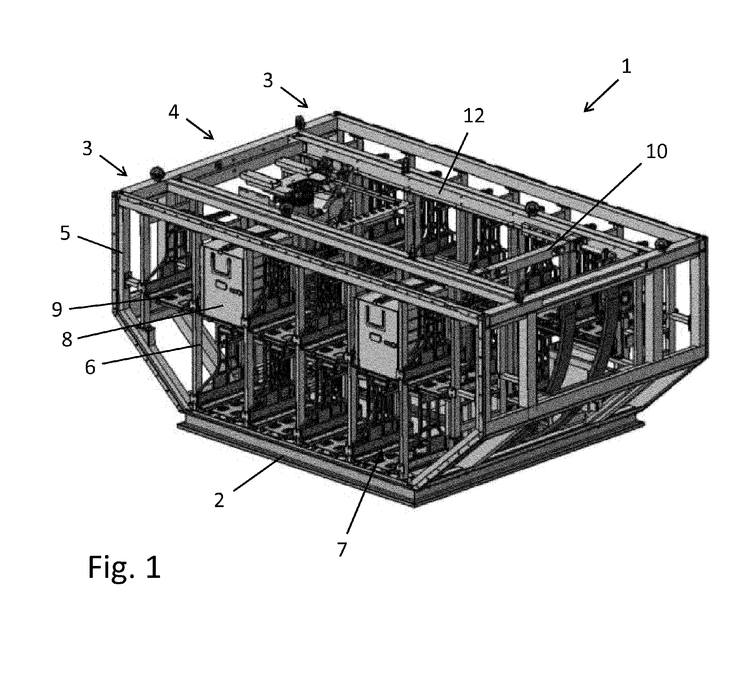

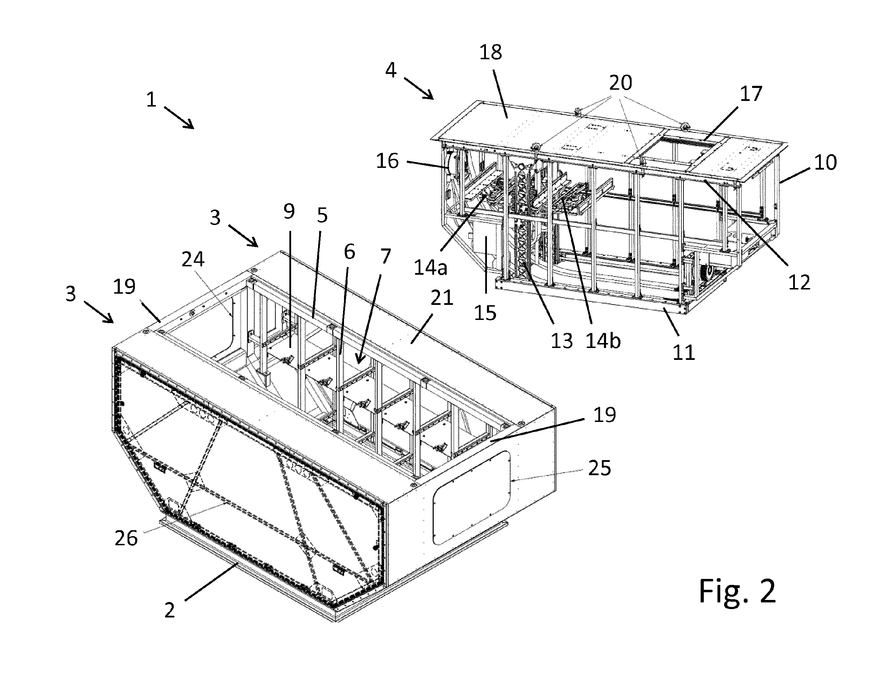

The cargo container 1 shown in Figure 1 without a large portion of its housing (which is visible in Figure 2) comprises a base plate 2, two identical storage rack modules 3 and a transport module 4 disposed between the two storage rack modules 3. The storage rack modules 3 and the transport module 4 are each coupled to the base plate 2 and arranged side by side, wherein the transport module 4 is in abutment with the storage rack modules 3 on its two opposite sides.

The storage rack modules 3 comprise a frame structure including an outer frame structure 5 and an inner frame structure 6 arranged inside the outer frame structure 5. The inner frame structure 6 provides a plurality of storage bays 7 of identical dimensions, each adapted for receiving and holding a service box 8 or other receptacle and each including a floor portion 9 providing guide means for guiding the service boxes 8 into and out of the bays 7 during insertion and removal thereof. The insertion and removal of the service boxes 8 into and from the storage bays 7 is possible at least at the side of the storage rack modules 3 facing the transport module 4 in the assembled condition shown in Figure 1.

The transport module 4, which is shown in more detail in Figure 2, comprises a frame structure 10 including a rectangular base frame portion 11 and a rectangular upper frame portion 12. Inside the frame structure 10 an automatic conveying apparatus 13 is mounted so as to be movable in the direction parallel to the storage rack modules 3 in the assembled condition of the cargo container 1 illustrated in Figure 1. The conveying apparatus 13 comprises two pick-up tables 14a, 14b, a retraction and insertion portion of which is operable to be independently and selectively extended out of the transport module 4 and retracted into the transport module 4 in a direction perpendicular to the movement direction of the conveying apparatus 13. Further, the pick-up tables 14a, 14b are operable to be selectively moved together in a direction between the base frame portion 11 and the upper frame portion 12, i.e. in the height or vertical direction. However, it is also possible to provide that the pick-up tables 14a, 14b are operable to be selectively moved independently in a direction between the base frame portion 11 and the upper frame portion 12, i.e. in the height or vertical direction.

Thus, in the assembled condition of the cargo container 1 the conveying apparatus 13 can be operated to be moved to a location in which the position of one of the pick-up tables 14a, 14b along the movement direction of the conveying apparatus 13 corresponds to the position of a storage bay 7 in which a service box 8 to be picked up by the conveying apparatus 13 is disposed. Then, the conveying apparatus 13 can be operated to move the respective one of the pick-up tables 14a, 14b to a height corresponding to the bottom of the service box 8 while the retraction and insertion portion of the pick-up table 14a, 14b is in its retracted position. Once the correct height is reached the conveying apparatus 13 can be operated to laterally extend the retraction and insertion portion of the respective one of the pick-up tables 14a, 14b out of the transport module 4 into the respective storage bay 7 into a space provided below the bottom of the respective service box 8 and the floor portion 9 of the storage bay 7. For providing this space the inner frame structure 6 and/or the service box 8 is provided with suitable support means adapted such that the service box 8 is supported at a distance above the floor portion 9. For example, the inner frame structure 6 could provide guide rails guiding and supporting the service box 8 at a suitable height. The storage bays 7 may preferably include locking devices adapted for locking service boxes 8 in the storage bays 7 and for being automatically released upon extension of a retraction and insertion portion of a pick-up table 14a, 14b into a storage bay 7. Subsequently, the conveying apparatus 13 can be operated to move the retraction and insertion portion of the respective one of the pick-up tables 14a, 14b to retract the service box 8 from the storage bay 7 onto the pick-up table 14a, 14b and into the transport module 4. In this connection it is also possible to provide that the retraction and insertion portion is moved vertically to an extent sufficient for lifting the service box 8 from the support means and supporting it on the retraction and insertion portion of the pick-up table, and to then retract it back into the transport module 4. Finally, the conveying apparatus 13 can be operated to move the conveying apparatus 13 and the respective one of the pick-up tables 14a, 14b such that the service box 8 is brought to a predetermined position immediately below and aligned with an opening 17 in an upper cover portion 18 secured to the upper frame portion 12 of the transport module 4. Once arranged in this predetermined position it can be advantageously grabbed by a suitable vertical lift apparatus and lifted out of the cargo container 1 and into a passenger compartment located above the cargo compartment in which the cargo container 1 is disposed, as explained above.

The entire process can also be reversed in order to receive a storage box 8 transported by the lift apparatus to the predetermined position and to transport the service box 8 to a selected storage bay 7. In this regard, having two pick-up tables 14a, 14b provides the advantage that it is possible to deliver a service box 8 to the lift apparatus with one of the pick-up tables 14a and receive another service box 8 from the lift apparatus on the other pick-up table 14b with only minimal additional movement of the conveying apparatus 13.

The described operation of the conveying apparatus 13 is effected by an electric motor and control unit 15 and a transmission arrangement 16 operatively coupled to the electric motor and control unit 15. The electric motor and control unit 15 and the transmission arrangement 16 are both arranged in and form part of the transport module 4.

As can be seen in Figure 2 the upper cover portion 18 slightly projects beyond the upper frame portion 12 along the entire circumference thereof. As can likewise be seen in Figure 2 the transport module 4 can be removed vertically upwardly from the cargo container 1 together with the upper cover portion 18 while the storage rack modules 3 and the base plate 2 remain in place, and can be reinserted by moving it into the opposite direction. When positioned in its place between the two storage rack modules 3 in the cargo container 1 the circumferential projection provided by the upper cover portion 18 rests on a frame structure 19 of the cargo container 1 mounted to the base plate 2 and on parts of the outer frame structures 5 of the storage rack modules 3, and the base frame portion 11 of the transport module 4 is supported on the base plate 2.

In this position the transport module 4 can be releasably secured in the cargo container 1 by means of, e.g., four securing means 20 including bolts which are adapted and positioned to engage corresponding recesses in the frame structure 5. Then the upper cover portion 18 forms a part of the housing 21 of the cargo container 1. As shown in Figure 2, the securing means 20 or some of the securing means can be provided with eyelets which facilitate engaging the transport module 4 by a lifting device. Such eyelets could also be provided separately from the securing means 20.

The housing 21 of the cargo container 1 may include openings 24 closable by closing elements 25. Such openings 24 can be advantageous for maintenance purposes. However, it is preferred not to provide such openings 24. Further, the housing 21 may include door arrangements 26 for allowing access to the storage bays 7 of the storage rack modules 3 without removing the storage rack modules 3 from the container 1. Then the storage rack modules 3 can be restocked by use of the door arrangements 26.

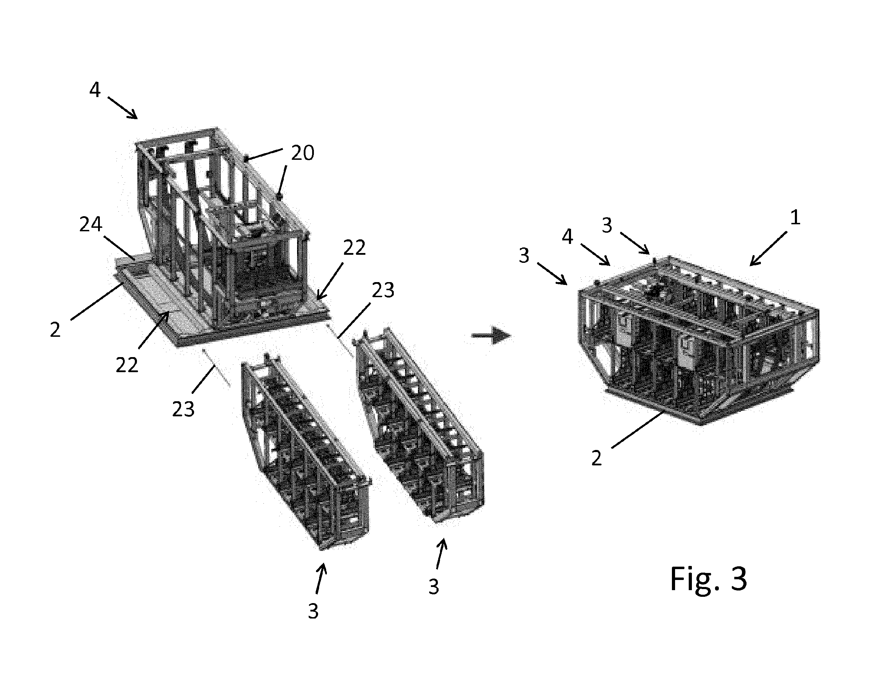

Figure 3 illustrates a further exemplary embodiment of the cargo container 1 which is largely identical to the preceding exemplary embodiment shown in Figures 1 and 2 and may also be combined with it. For illustration purposes, most of the housing 21 has been removed from the cargo container 1. As can be seen in the left part of Figure 3, the transport module 3 is coupled to the base plate 2. Different from the preceding embodiment this coupling may also be non-releasable. On the other hand, if the coupling is releasable the embodiment of Figure 3 merely constitutes a further development of the embodiment of Figures 1 and 2. As can likewise be taken from Figure 3, the base plate 2 comprises on its upper surface two guide rail arrangements 22, one on each side of the transport module 4. Each guide rail arrangement 22 includes spaced two guide rails extending parallel to one another and to the sides of the transport module 4 facing the storage rack modules 3 in the assembled condition of the cargo container 1.

The guide rail arrangements 22 and the outer frame structures 5 of the storage rack modules 3 are adapted such that the storage rack modules 3 can be easily coupled to the base plate 2 and positioned in the cargo container 1 by inserting them into the guide rail arrangements 22 in the direction of the arrows 23 until they abut a stop 24. In this position they can be releasably locked to the base plate 2 by a suitable locking means (not shown) and/or releasably secured to the transport module 3 by securing means 20 in a manner similar to the one described above with reference to Figure 2. By moving the storage rack modules 3 into the opposite direction they can be easily and quickly removed from the cargo container 1, thereby enabling cleaning, maintenance and/or restocking the storage rack modules 3 remote from the remainder of the cargo container 1 and outside of a vehicle, while leaving at least the base plate 2 and the transport module 3, and possibly large portions or the entirety of the housing 21 of the cargo container 1 in place, in particular, for example, coupled to a cargo hold device in a cargo compartment of an aircraft.

For enabling removal and reinsertion of the storage rack modules 3 in the manner described above, the housing 21 must comprise suitable doors, or portions of the housing 21 must be removable. In this regard it is possible that the portions of the housing 21 corresponding to the storage rack modules 3 remain attached to the storage rack modules 3 and are removed and repositioned together with them.

## Claims

1. A cargo container for storing goods and for loading into a cargo compartment of a vehicle, the cargo container (1) comprising:
- a housing (21) including a base plate (2) and defining an interior cavity,
- a storage rack arrangement (3) being adapted for storing a plurality of goods in the cavity, and
- a transport arrangement (4) operable for selectively transporting goods stored in the storage rack arrangement (3) from the storage rack arrangement to a predetermined location in the cavity, wherein the transport arrangement (4) comprises a conveying means (13) and a control unit (15) adapted for automatically controlling and operating the conveying apparatus (13),
**characterized in that** the storage rack arrangement is constructed in the form of at least one storage rack module (3) and the transport arrangement is constructed in the form of at least one transport module (4) separate from the at least one storage rack module (3), wherein each of the at least one storage rack module (3) and/or each of the at least one transport module (4) is independently removable from the container (1), and wherein for each of the storage rack modules (3) and transport modules (4) removable from the container (1) the cargo container (1) comprises a releasable coupling mechanism (22) for fastening the respective module (3, 4) to the housing (21), to the base plate (2) and/or to another one of the at least one storage rack module (3) and at least one transport module (4) and for locating it in a predetermined position with respect to the remainder of the container (1).

2. The cargo container according to claim 1, wherein the at least one storage rack module (3) is a non-electrical module.

3. The cargo container according to claim 2, wherein the at least one storage rack module (3) comprises at least one passive refrigerating means and/or at least one active refrigerating means.

4. The cargo container according to any of the preceding claims, wherein for each of the storage rack modules (3) and transport modules (4) removable from the container (1)
a) the housing (21) includes a corresponding door, and/or
b) the housing (21) includes a removable wall portion, for enabling removal of the respective storage rack module (3) or transport module (4).

5. The cargo container according to any of claims 1 to 3, wherein each of the storage rack modules (3) and transport modules (4) removable from the container (1) comprises a wall portion (18) forming part of the housing (21) when the respective module (3, 4) is fastened to the housing (21), such that the respective modules (3, 4) are removable from the container (1) together with the corresponding wall portion (18).

6. The cargo container according to any of the preceding claims, wherein the housing (21) comprises an opening (17) and wherein the predetermined location is close to the opening (17).

7. The cargo container according to any of the preceding claims, wherein the at least one transport module (4) is fixedly secured to the base plate (2) or comprises the base plate (2) and the at least one storage rack module (3) is removable from the container (1).

8. The cargo container according to any of the preceding claims, wherein at least one of the coupling mechanisms comprises a rail arrangement (22) provided on the base plate (2) and adapted for receiving and guiding the respective module (3, 4) during insertion and removal thereof.

9. The cargo container according to any of the preceding claims, wherein
the at least one transport module (4) comprises at least one electric motor and/or at least one pneumatic or hydraulic drive means and/or at least one sensor and/or at least one control means forming part of or constituting the control unit (15), and/or
the at least one transport module (4) comprises a conveyor belt, a conveyor chain, a gripper and/or a lifting means forming part of or constituting the conveying means (13).

10. The cargo container according to any of the preceding claims being shaped and dimensioned like a standard LD3 container.

11. A vehicle comprising a first compartment and a second compartment separated by a wall, the vehicle further comprising:
- an opening in the wall,
- a galley arranged in the first compartment,
- a mounting means arranged in the second compartment and adapted for holding a cargo container according to any of the preceding claims at a predetermined place in the second compartment,
- a cargo container according to any of the preceding claims, and
- a conveyor apparatus,
wherein the predetermined place and the conveyor apparatus are arranged and adapted such that when the cargo container (1) is held by the mounting means the conveyor apparatus is operable to convey goods from the predetermined location in the cargo container (1) through the opening in the wall between the first compartment and the second compartment to the galley and vice versa.

12. The vehicle according to claim 11, wherein the first compartment is a passenger compartment and the second compartment is a cargo compartment.

13. The vehicle according to claim 11 or claim 12, wherein the wall is a floor portion of the vehicle and, in operation of the vehicle, the first compartment is arranged above the second compartment.

14. The vehicle according to any of claims 11 to 13, wherein the vehicle is an aircraft.

15. A method of operating a cargo container according to any of claims 1 to 10, comprising the following steps:
- arranging a cargo container (1) according to any of claims 1 to 10 in a compartment of a vehicle,
- removing at least one of the storage rack modules (3) and/or at least one of the transport modules (4) from the container (1),
- for any removed storage rack module (3)
- rearranging it in the container after storing goods in it or replacing it with an identical storage rack module (3) having goods stored therein, and/or
- cleaning and/or performing maintenance operations on it,
- for any removed transport module (4) performing maintenance operations on it and then rearranging it in the container (1).
